# EUROPÄISCHE PATENTSCHRIFT

(11) **EP 2 402 235 B1**
(45) Veröffentlichungstag und Bekanntmachung des Hinweises auf die Patenterteilung: **31.08.2016**
(21) Anmeldenummer: 11004582.0
(22) Anmeldetag: 06.06.2011
(51) Int. Cl.: B62D 25/04, B60J 1/00, B60J 7/10, B66F 9/075

(54) **Klemmvorrichtung zur Befestigung eines Anbauteils an einem Profilrohr**
Clamp device for attaching a part to a profiled tube
Dispositif de serrage pour la fixation d'un élément à monter sur un tuyau profilé

(30) Priorität: 30.06.2010 DE 102010025596
(43) Veröffentlichungstag der Anmeldung: 04.01.2012
(73) Patentinhaber: STILL GmbH, 22113 Hamburg (DE)
(72) Erfinder: Schulz, Matthias, 19288 Neu-Krenzlin (DE)
(74) Vertreter: Geirhos, Johann

(56) Entgegenhaltungen:
- EP-A1- 0 021 226
- EP-A1- 0 484 693
- EP-A1- 2 199 156
- WO-A2-2010/056845
- US-A- 1 760 426
- US-A1- 2001 022 453
- US-A1- 2002 162 198

## Beschreibung

Die Erfindung betrifft eine Klemmvorrichtung zur Befestigung eines Anbauteils, insbesondere einer Scheibe oder einer Kabinenverkleidung, an einem Profilrohr eines Fahrerschutzdaches eines Fahrzeugs, wobei das Profilrohr einen Profilquerschnitt mit mindestens zwei hinterschnittig angeordneten Profilwänden aufweist.

Zur Befestigung von Anbauteilen, beispielsweise Scheiben oder von Verdeckplanen gebildeten Kabinenverkleidungen, an Profilrohren eines Fahrerschutzdaches ist es bekannt, die Scheibe bzw. die Kabinenverkleidung mit Bohrungen zu versehen, um diese mittels Haltern und Schraubverbindungen an den Profilrohren zu befestigen.

Um den Aufwand für die Bohrungen in der Scheibe bzw. in der Kabinenverkleidung zu vermeiden, ist es bekannt, Halter zur Befestigung der Scheibe bzw. der Kabinenverkleidung vorzusehen, die mittels Schraubverbindungen in Bohrungen, bevorzugt Gewindebohrungen, der Profilrohre befestigt werden können oder die an Bolzen, bevorzugt Gewindebolzen, befestigt werden können, die an den Profilrohren angeschweißt sind.

An diesen Befestigungsarten ist nachteilig, dass durch die Bohrungen in der Scheibe bzw. der Kabinenverkleidung, bzw. die Bohrungen oder angeschweißten Bolzen an den Profilrohren vorbereitende Arbeiten erforderlich sind, die den Bauaufwand erhöhen. Zudem ist durch die Bohrungen bzw. Bolzen der Befestigungspunkt des Anbauteils fest vorgegeben und kann nachträglich nicht verändert werden.

Zudem werden bei Fahrerschutzdächern Varianten mit Scheibe und ohne Scheibe bzw. mit Kabinenverkleidung und ohne Kabinenverkleidung gebaut. Um jedoch eine Nachrüstbarkeit der Scheibe bzw. der Kabinenverkleidung zu gewährleisten, müssen alle Fahrerschutzdächer mit den Gewindebohrungen bzw. Schweißbolzen an den Profilrohen versehen werden.

Ein weiterer Nachteil der bekannten Befestigungsarten besteht darin, dass sich durch die Bohrungen bzw. Schweißbolzen an den Profilrohren eine Schwächung der Profilrohre ergibt und somit die Belastbarkeit des Fahrerschutzdaches verringert wird.

Um den Aufwand für die Gewindebohrungen bzw. Schweißbolzen an den Profilrohren zu vermeiden und eine Schwächung der Profilrohre zu vermeiden, ist es bereits bekannt, Anbauteile, beispielsweise Scheinwerfer oder Außenspielegel, mittels einer mehrteiligen Klemmvorrichtungen an dem Profilrohr zu befestigen. Die Klemmvorrichtung ist hierbei mit Gewindebohrungen versehen, mittels denen das Anbauteil an der Klemmvorrichtung über Befestigungsschrauben befestigt werden kann. Eine derartige, mehrteilige Klemmvorrichtung mit zwei Klemmstücken, an denen eine Anbauteil mittels Befestigungsschrauben befestigt werden kann, ist aus der DE 202 20 363 U1 bekannt.

Die beiden Klemmstücke der DE 202 20 363 U1 werden mittels einer Klemmschraube gegeneinander verspannt und an dem Profilrohr befestigt. Das Verklemmen der beiden Klemmstücke erhöht den Montageaufwand der Klemmvorrichtung an dem Profilrohr. Durch die Befestigung des Anbauteils mittels Gewindebohrungen sind weiterhin Bohrungen an dem Anbauteil für die Befestigungsschrauben erforderlich. Hierdurch ist insbesondere bei einem als Scheibe ausgebildeten Anbauteil nachteilig, dass weiterhin aufwändige Bohrungen in der Scheibe erforderlich sind und bei der Befestigung der Scheibe die Lage der von den beiden Klemmstücken gebildeten Klemmvorrichtungen an den Profilrohren durch die Bohrungen in der Scheibe festgelegt sind.

Die EP 0 484 693 A1 offenbart eine Verbindung zwischen einem vertikalen Hohlprofil und einer Deckelplatte, die zusammen einen Deckel bilden, wobei die Deckelplatte von einem Klemmprofil an den Flansch des Hohlprofils gedrückt wird. Das gattungsgemässe Klemmprofil ist in eine Aufnahmetasche des Hohlprofils einsteckbar bzw. einrastbar und hält über einen Federflansch die Deckelplatte an dem Flansch.

Die EP 0 021 266 A1 offenbart einen Dachrahmen für einen Fahrzeugaufbau. Zur Befestigung eines Dachblechs an einem Schenkel des Grundrahmens ist eine Klemmleiste mit einem Schenkel vorgesehen. Die Klemmleiste wird mit hinterhakenden Nasen an dem Grundrahmen befestigt, so dass das Dachblech zwischen dem Schenkel des Grundrahmens und dem Schenkel der Klemmleiste fixiert ist.

Die US 1760426 A offenbart in der Figur 5 eine schwingungsabgekoppelte Verbindung zum Verbinden von zwei Bauteilen. Die beiden Bauteile sind jeweils mit einer V-Nut versehen, in die ein Kunststoffelement eingelegt wird. Das Kunststoffelement hat Flansche, die zwischen Anlageflächen der beiden Bauteile angeordnet sind. Durch eine Spannschraube werden die beiden Bauteile unter Zwischenschaltung der Flansche des Kunststoffelements miteinander verspannt.

Die US 2001/0022453 A1 offenbart in den Figuren 2-6b die Befestigung einer Abdeckplane auf einem Auto. Die Plane ist mit einem Wulst versehen, der in einen Clips einclipsbar ist. Der Clips ist an einem Flansch eines Halters befestigt, der wiederum am Auto befestigt ist. Der Flansch ist mit Einbuchtungen versehen. Der Clips hat zwei Beine mit Höckern, mit denen der Clips an entsprechenden Einbuchtungen des Halters eingerastet werden kann. Ein Scharnier am Clips ermöglicht eine Beweglichkeit der Beine.

Die US 2002/0162198 A1 offenbart in den Figuren 2, 3 eine Klemmvorrichtung für eine Plane. An einem Halter ist eine Wulst ausgebildet, auf dem eine Klemme mit einer Nut gelagert ist. Über eine Spannschraube wird die C-förmige Klemme gegen den Halter verspannt.

Die EP 2 199 156 A1 offenbart eine zweiteilige Klemme, die mittels einer Spannschraube an einem Profilrohr angeklemmt werden kann.

Die WO 2010/056845 A2 offenbart eine Fahrerkabine einer Arbeitsmaschine, bei dem eine Scheibe an den Profilrohren der Fahrerkabine mittels angeschraubte Halter gehalten wird.

Der vorliegenden Erfindung liegt die Aufgabe zu Grunde, eine Klemmvorrichtung der eingangs genannten Art zur Verfügung zu stellen, die mit geringem Bauaufwand und Herstellaufwand eine einfache Befestigung des Anbauteils mit geringem Montageaufwand ermöglicht.

Diese Aufgabe wird erfindungsgemäß dadurch gelöst, dass die Klemmvorrichtung ein einteiliges Klemmstück umfasst, das mit einer Haltenase versehen ist, mittels der das Anbauteil formschlüssig an dem Profilrohr gehaltert ist, wobei das Klemmstück das Profilrohr zumindest teilweise umgreift und zwei hakenförmige Fortsätze zum jeweiligen Angreifen an einer der Profilwände des Profilrohres aufweist, wobei das Klemmstück zwischen den hakenförmigen Fortsätzen elastisch verformbar ist und das Klemmstück mittels einer Spannvorrichtung an dem Profilrohr anklemmbar ist, wobei die Spannvorrichtung ein Federelement, insbesondere eine Federklammer, umfasst, das mit beiden hakenförmigen Fortsätzen des Klemmstücks in Anlage steht und auf das Klemmstück aufsteckbar ist, oder wobei die Spannvorrichtung zwei Federelemente, insbesondere Federbleche, aufweist, wobei jedes Federelement mit einem Ende jeweils mit einem hakenförmigen Fortsatz des Klemmstücks in Anlage steht und die beiden Federelemente mittels eines Spannmittels gegeneinander verspannbar sind. Ein derartiges einteiliges Klemmstück, das zwei hakenförmige Fortsätze aufweist und zwischen den beiden hakenförmigen Fortsätzen elastisch verformbar ist, weist einen geringen Bauaufwand und Herstellaufwand auf. Zudem wird mit dem erfindungsgemäßen einteiligen Klemmstück eine einfache und schnelle Montage an dem Profilrohr ermöglicht, da das Klemmstück durch die elastische Verformbarkeit im Sinne einer Clipsverbindung mit den beiden hakenförmigen Fortsätzen auf die hinterschnittig angeordneten Profilwände des Profilrohres aufgesteckt werden kann und somit am Profilrohr positioniert werden kann und anschließend mit der Spannvorrichtung zur Anlage an das Profilrohr gebracht werden und an dem Profilrohr angeklemmt werden kann. Mit einer Haltenase an dem Klemmstück kann insbesondere ein als Scheibe oder ein als Kabinenverkleidung ausgebildetes Anbauteil bzw. Verkleidungsteil auf einfache Weise an dem Fahrerschutzdach befestigt werden. Durch die formschlüssige Halterung der Scheibe an dem Profilrohr mittels der Haltenase sind an der Scheibe keine Bohrungen für die Halterung der Scheibe erforderlich, so dass keine vorbereitende Maßnahmen an der Scheibe erforderlich sind. Durch den Entfall der Bohrungen in der Scheibe kann die Klemmvorrichtungen an einer beliebigen Stelle und somit der von der Klemmvorrichtung gebildete Befestigungspunkt ungebunden an dem Profilrohr an einer beliebigen Stelle angeordnet werden. Bei einer Kabinenverkleidung, beispielsweise einer Verdeckplane eines Planenverdeckes kann mit der erfindungsgemäßen Klemmvorrichtung und deren ungebundenden Positionierbarkeit auf einfache Weise in einem Eckbereich der Plane mittels der Haltenase eine formschlüssige Halterung der Plane ohne zusätzliche Ösen in der Verdeckplane an dem Profilrohr erzielt werden, so dass ein Abschälen der Verdeckplane im Eckbereich wirksam vermieden werden kann.

Hierdurch kann eine Scheibe bzw. eine Kabinenverkleidung sowohl in der Serienausstattung als auch bei einer Nachrüstung auf einfache Weise und mit geringem Bauaufwand und Montageaufwand an dem Fahrerschutzdach angeordnet werden. Insgesamt wird somit mit einer erfindungsgemäßen einteiligen Klemmvorrichtung mit einer Haltenase eine kostengünstige Befestigungsmöglichkeit eines als Scheibe bzw. als Kabinenverkleidung gebildeten Anbauteils an einem Fahrerschutzdach erzielt, die einfach und schnell an einer beliebigen Stelle des Profilrohr montierbar ist, die eine Serienausstattung sowie eine Nachrüstbarkeit des Fahrerschutzdaches mit der Scheibe bzw. der Kabinenverkleidung ermöglicht und insbesondere durch den Entfall von Bohrungen in der Scheibe sowie Gewindebohrungen oder Schweißbolzen an dem Profilrohr keine vorbereitende Maßnahmen und Arbeiten an dem Profilrohr und der Scheibe verursacht. Die Spannvorrichtung umfasst ein Federelement, insbesondere eine Federklammer, das mit den beiden hakenförmigen Fortsätzen des Klemmstücks in Anlage steht und auf das Klemmstück aufsteckbar ist. Mit einer derartigen Federklammer, die im Sinne einer Clipsverbindung auf das Klemmstück aufgesteckt wird und die mit beiden hakenförmigen Fortsätzen des Klemmstücks in Anlage steht, können beide hakenförmigen Fortsätze des Klemmstücks auf einfache Weise an die entsprechende Profilwand angedrückt werden, um eine sichere Befestigung des Klemmstücks an dem Profilrohr zu erzielen. Alternativ weist die Spannvorrichtung zwei Federelemente, insbesondere Federbleche, auf, wobei jedes Federelement mit einem ersten Ende jeweils mit einem hakenförmigen Fortsatz des Klemmstücks in Anlage steht und die beiden Federelement mittels eines Spannmittels gegeneinander verspannbar sind. Mit zwei gegeneinander verspannbaren Federelementen kann durch entsprechendes Andrücken beider hakenförmigen Fortsätze des Klemmstücks an die jeweilige Profilwand des Profilrohres eine besonders stabile Befestigung des Klemmstücks an dem Profilrohr erzielt werden.

Hinsichtlich eines günstigen Aufbaus des Klemmstücks ergeben sich Vorteile, wenn die Haltenase einstückig an dem Klemmstück angeformt ist.

Gemäß einer bevorzugten Ausgestaltungsform der Erfindung weist das Klemmstück einen an die Außenkontur, insbesondere einen konvexen Außenkonturbereich, des Profilrohr angepasste Innenkontur auf, an der die hakenförmigen Fortsätze einstückig angeformt sind.

Die elastische Verformbarkeit des Klemmstücks zum Aufclipsen des Klemmstücks auf das Profilrohr kann durch entsprechende elastische Materialeigenschaften des Klemmstücks erzielt werden. Gemäß einer bevorzugten Ausgestaltungsform der Erfindung ist das Klemmstück zwischen den hakenförmigen Fortsätzen mit einem Scharniergelenk versehen. Mit einem derartig zwischen den beiden hakenförmigen Fortsätzen angeordneten Scharniergelenk kann die elastische Verformbarkeit zum Aufclipsen des Klemmstücks auf das Profilrohr auf einfache Weise erzielt werden.

Hinsichtlich einer kostengünstigen Herstellung des Klemmstücks ergeben sich besondere Vorteile, wenn das Scharniergelenk als Filmscharnier ausgebildet ist. Ein Filmscharnier kann durch eine entsprechende Aussparung in dem Klemmstück auf einfache Weise hergestellt werden.

Besondere Vorteile ergeben sich, wenn gemäß einer Ausführungsform der Erfindung die Haltenase mit einer Anlagefläche für das Anbauteil versehen ist, die im angebauten Zustand des Klemmstücks im Wesentlichen parallel zu einer Anlagefläche des Profilrohrs angeordnet ist, wobei in dem Zwischenraum zwischen den Anlageflächen das Anbauteil angeordnet ist. Das Anbauteil, bevorzugt eine Scheibe oder eine Verdeckplane als Verkleidungsteil, wird somit nach der Befestigung und dem Verklemmen des Klemmstücks an dem Profilrohr zwischen der Anlagefläche an der Haltenase und einer entsprechenden Anlagefläche des Profilrohr formschlüssig gehalten, so dass eine formschlüssige Halterung der Scheibe in dem Einbauraum zwischen der Haltenase und der Anlagefläche des Profilrohrs ohne zusätzliche Bohrungen in der Scheibe bzw. ein Anliegen der Verdeckplane im Eckbereich an der Anlagefläche des Profilrohrs auf einfache Weise erzielt werden kann.

Besondere Vorteile ergeben sich, wenn gemäß einer Weiterbildung der Erfindung die zwei Federelemente im montierten Zustand jeweils mit einem zweiten Ende an einem Anlagepunkt miteinander in Wirkverbindung stehen, wobei das Spannmittel zwischen den ersten und zweiten Enden der Federelemente angeordnet ist. Die beiden Federelement sind an dem Anlagepunkt im Sinne einer Schwenkachse miteinander verbunden, so dass mit dem Spannmittel, das zwischen den beiden Enden des jeweiligen Federelements angeordnet ist, an den beiden ersten Enden der Federelemente eine Verschwenken gegeneinander erzielt wird, wodurch auf einfache Weise sichergestellt wird, dass beide hakenförmige Fortsätze des Klemmstücks gegen die entsprechende Profilwand des Profilrohr verspannt werden.

Im angebauten Zustand ist hierzu zweckmäßigerweise ein erstes Federelement der zwei Federelemente im Bereich eines ersten hakenförmigen Fortsatzes des Klemmstücks, der an einer ersten Profilwand des Profilrohres angreift, angeordnet und verspannt den ersten hakenförmigen Fortsatz gegen die erste Profilwand und ist ein zweites Federelement der zwei Federelemente im Bereich eines zweiten hakenförmigen Fortsatzes des Klemmstücks, der an einer zweiten Profilwand des Profilrohres angreift, angeordnet und verspannt den zweiten hakenförmigen Fortsatz gegen die zweite Profilwand. Hierdurch kann mit den beiden Federelementen das Klemmstück sicher in Anlage an das Profilrohr gebracht werden und das Klemmstück mit dem Profilrohr verklemmt werden.

Sofern hierbei das Klemmstück zwischen der Haltenase und dem zweiten hakenförmigen Fortsatz mit einer Durchgangsöffnung für das zweite Federelement versehen ist, kann das zweite Federelement nach dem Aufclipsen des Klemmstücks auf das Profilrohr auf einfache Weise über die Durchgangsöffnung eingesteckt werden, um mit dem ersten Ende den zweiten hakenförmigen Fortsatz des Klemmstücks gegen die entsprechende Profilwand des Profilrohres zu verspannen.

Gemäß einer vorteilhaften Weiterbildung der Erfindung ist an der Haltenase im Bereich der Anlagefläche ein Weichbauteil angeordnet. Mit einem derartigen Weichbauteil, beispielsweise einem Gummistopfen oder einem EPDM-Zwischenlage (Ethylen-Propylen-Dien-Kautschuk) oder einem thermoplastischen Elastomer (TPE), kann eine Schwingungsabkopplung des Anbauteils auf einfache Weise erzielt werden. Insbesondere bei einer Scheibe, die mittels eines Dichtungsprofils an dem Profilrohr anliegt, kann hierdurch eine Schwingungsabkopplung und Geräuschreduzierung auf einfache Weise erzielt werden.

Sofern gemäß einer bevorzugten Weiterbildung der Erfindung an der Haltenase im Bereich der Anlagefläche mindestens ein Haltenoppen oder ein Verzahnungsabschnitt ausgebildet ist, kann die Befestigung einer Verdeckplane verbessert werden, in dem eine Verzahnung der Verdeckplane mit der Haltenase erzielt wird.

Bevorzugt ist das Spannmittel als Spannverschraubung ausgebildet. Mit einer von einer Spannschraube und einer Gewindemutter gebildeten Spannverschraubung kann die Befestigung des Klemmstücks an dem Profilrohr über ein Federelement bzw. zwei Federelemente auf einfache Weise erzielt werden.

Gemäß einer zweckmäßigen Weiterbildung der Erfindung ist das Klemmstück mit einem Befestigungsadapter, insbesondere einer Gewindebohrung oder einem Halter, für ein Anbauteil, insbesondere ein weiteres Anbauteil, versehen. An einem derartigen Befestigungsadapter, bevorzugt einer oder mehrerer Gewindebohrungen, an dem Klemmstück, ein weiteres Anbauteil an dem einteiligen Klemmstück befestigt werden. Sofern gemäß einer bevorzugten Ausführungsform das Klemmstück mit einer Haltenase für eine Scheibe bzw. eine Verdeckplane versehen ist, kann mit einem derartigen zusätzlichen Befestigungsadapter, das Klemmstück auf einfache Weise zur Befestigung eines zusätzlichen Anbauteils, beispielsweise einer Lampe, eines Arbeitsscheinwerfers, eines Spiegels, eines Schutzgitters, einer Ablage oder eines Schreibbretts, an dem Profilrohr des Fahrerschutzdaches genutzt werden. Das erfindungsgemäße Klemmstück kann alternativ zur alleinigen Befestigung eines Anbauteils genutzt werden, beispielsweise einer Lampe, eines Arbeitsscheinwerfers, eines Spiegels, eines Schutzgitters, einer Ablage oder eines Schreibbretts.

Sofern gemäß einer möglichen Weiterbildung der Erfindung das Klemmstück mit einer weiteren Haltenase zur weiteren Befestigung eines zweiten Anbauteils versehen ist, kann insbesondere in Verbindung mit einem Profilrohr, das einen Profilquerschnitt mit vier hinterschnittig angeordneten Profilwänden und somit zwei Hinterschneidungen aufweist, eine formschlüssige Befestigung von zwei Anbauteilen an dem Profilrohr erzielt werden. Hierdurch wird es möglich, an dem Profilrohr mit einem Klemmstück zwei Scheiben bzw. zwei Kabinenverkleidungen an entsprechenden von jeweils zwei Profilwänden gebildeten Hinterschneidungen formschlüssig zu haltern.

Hinsichtlich einer einfachen Herstellung des erfindungsgemäßen Klemmstücks ergeben sich besondere Vorteile, wenn das Klemmstück als Kunststoffbauteil ausgebildet ist. Ein derartiges, als Kunststoffteil ausgebildetes Klemmstück ermöglicht auf einfache Weise eine elastische Verformbarkeit zwischen den beiden hakenförmigen Fortsätzen bzw. kann auf einfache Weise bereits bei der Herstellung, beispielsweise einem Spritzgießprozess, mit dem Scharniergelenk zwischen den beiden hakenförmigen Fortsätzen versehen werden.

Hinsichtlich einer günstigen Stabilität des Klemmstücks ergeben sich Vorteile, wenn das Klemmstück einen im Wesentlichen U-förmigen Querschnitt mit zwei senkrecht zu einem mit der Innenkontur versehenen Stegabschnitt angeordneten Flanschabschnitten aufweist, wobei der Querschnitt einen Einbauraum für die Spannvorrichtung bildet. Durch den Einbau der von dem Federelement bzw. den Federelementen und der Spannverschraubung gebildeten Spannvorrichtung in das Klemmstück wird ein platzsparender Aufbau der Klemmvorrichtung erzielt.

Bevorzugt ist eine Abdeckung zum Verschließen des Einbauraumes vorgesehen, wodurch die in den Einbauraum des Klemmstücks montierte Spannvorrichtung vor Beschädigungen und Verschmutzungen geschützt werden kann.

Hinsichtlich einer einfachen und kostengünstigen Montage ergeben sich Vorteile, wenn die Abdeckung mittels einer Clipsverbindung an dem Klemmstück befestigbar ist.

Die Erfindung betrifft weiterhin ein Fahrzeug, insbesondere Flurförderzeug, Schlepper oder Kommunalfahrzeug, mit einer erfindungsgemäßen Klemmvorrichtung, wobei mittels der Klemmvorrichtung eine Scheibe bzw. eine von einer Verdeckplane gebildete Kabinenverkleidung als Verkleidungsteil an dem Fahrerschutzdach befestigt ist. Mit dem erfindungsgemäßen einteiligen Klemmstück kann in Verbindung mit der Haltenase eine einfache und kostengünstige Befestigungsmöglichkeit für eine Scheibe eines Fahrerschutzdaches erzielt werden, wobei keine vorbereitenden Maßnahmen an dem Profilrohr und der Scheibe durch Bohrungen, Gewinde oder Schweißbolzen erforderlich sind. Bei einer Verdeckplane eines Planenverdeckes kann mit dem erfindungsgemäßen einteiligen Klemmstück in Verbindung mit der Haltenase eine einfache und kostengünstige Befestigungsmöglichkeit für die Verdeckplane in einem Eckbereich des Fahrerschutzdaches erzielt werden, um ein Abschälen der Verdeckplane am Eckbereich zu vermeiden. Dadurch kann die erfindungsgemäße Klemmvorrichtung für die Serienausstattung als auch für die Nachrüstung eines Fahrerschutzdaches mit einer Scheibe bzw. einer Verdeckplane verwendet werden. Zudem ergibt sich eine einfache und schnelle Montage der Klemmvorrichtung, wobei als weiterer Vorteil eine ungebundene Positionierung der Klemmvorrichtung an einer beliebigen Stelle des Profilrohres möglich ist.

Weitere Vorteile und Einzelheiten der Erfindung werden anhand der in den schematischen Figuren dargestellten Ausführungsbeispiele näher erläutert. Hierbei zeigt
- Figur 1: ein Fahrzeug in einer Seitenansicht,
- Figur 2: eine erste Ausführungsform einer erfindungsgemäßen Klemmvorrichtung in einer perspektivischen Darstellung,
- Figur 3: die Klemmvorrichtung der Figur 2 in einem Querschnitt,
- Figur 4: eine zweite Ausführungsform einer erfindungsgemäßen Klemmvorrichtung in einer perspektivischen Darstellung und
- Figur 5: die Klemmvorrichtung der Figur 4 in einem Querschnitt.

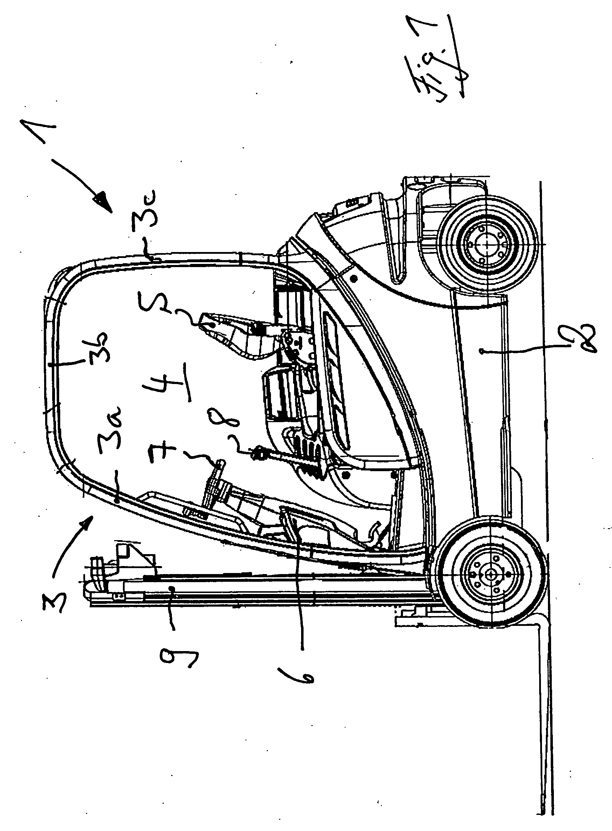

In der Figur 1 ist ein als Gegengewichtsgabelstapler ausgebildetes Flurförderzeug als Beispiel eines Fahrzeugs 1 dargestellt. Das Fahrzeug 1 umfasst einen Fahrzeugrahmen 2 mit einem Fahrerschutzdach 3, das einen Fahrerarbeitsplatz 4 für eine Bedienperson bildet. Der Fahrerarbeitsplatz umfasst beispielsweise einen Fahrersitz 5, eine Bedienkonsole 6 mit einem Lenkrad 7, und Bedieneinrichtungen 8 für eine Arbeitshydraulik.

Das Fahrerschutzdach 3 ist von seitlichen vorderen Profilrohren 3a, dachseitigen Profilrohren 3b und hinteren Profilrohren 3c gebildet, die mittels entsprechender Querverbindungen querversteifend verbunden sind. Zwischen den vorderen Profilrohren 3a kann eine einem Hubmast 9 zugewandte Scheibe, beispielsweise eine Glasscheibe, angeordnet sein. Zudem ist es möglich, an den hinteren Profilrohren 3c eine heckseitige Scheibe, beispielsweise eine Glasscheibe, anzuordnen. Weiterhin kann an den dachseitigen Profilrohren 3b eine Scheibe, bevorzugt eine Glasscheibe, angeordnet werden. Bei der Ausbildung des Fahrerschutzdaches 3 mit einem Planenverdeck sind bevorzugt an einer oder beiden seitlichen Zustiegsöffnungen des Fahrerschutzdaches, die jeweils von den Profilrohren 3a, 3b und 3c umgrenzt werden, eine Kabinenverkleidung in Form einer Verdeckplane angeordnet.

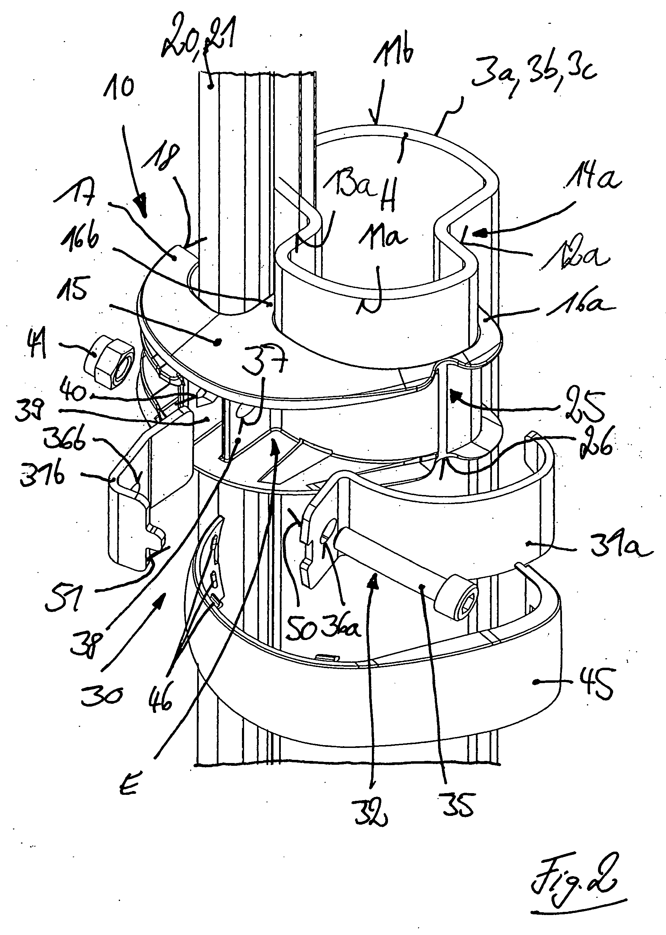

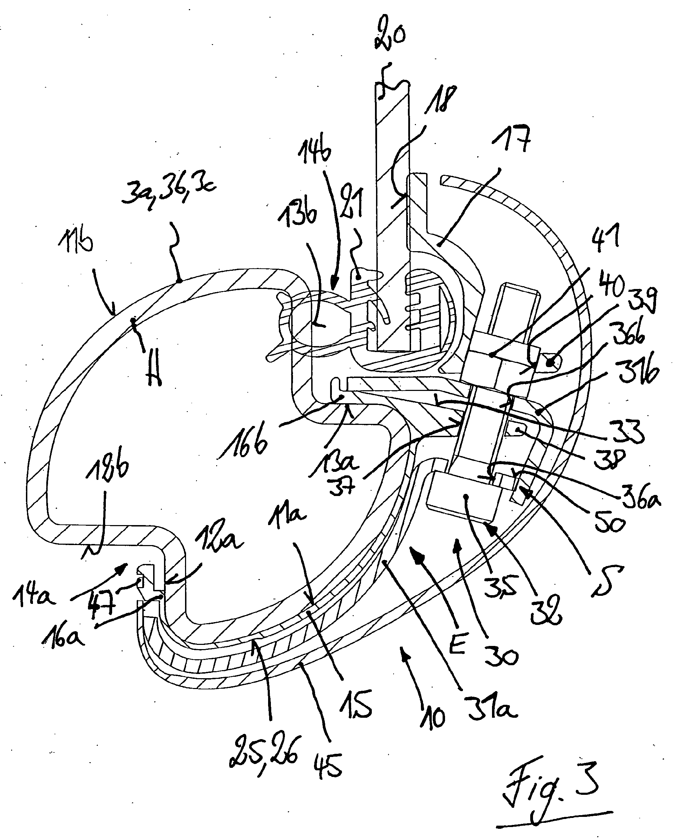

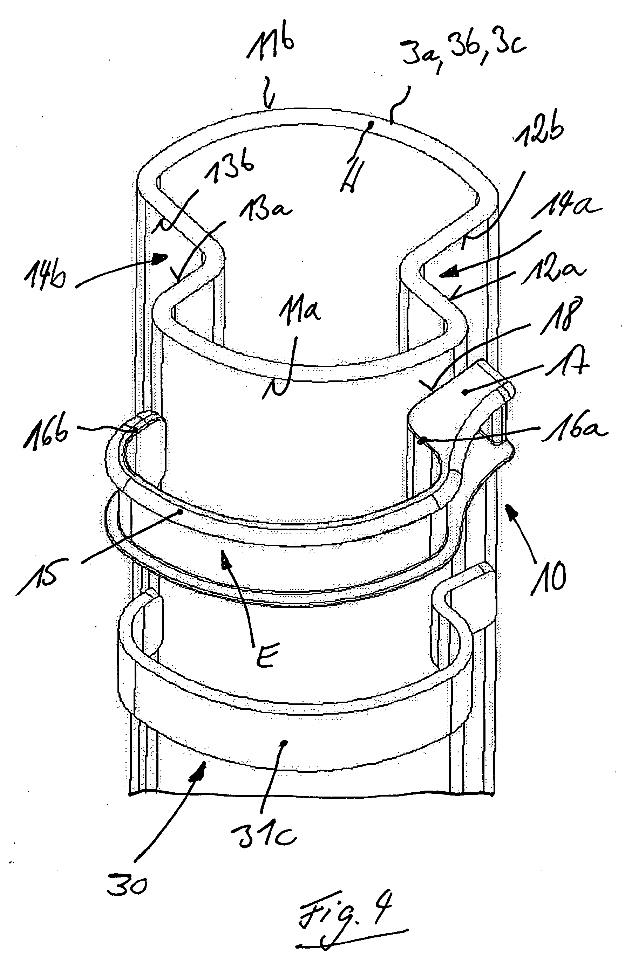

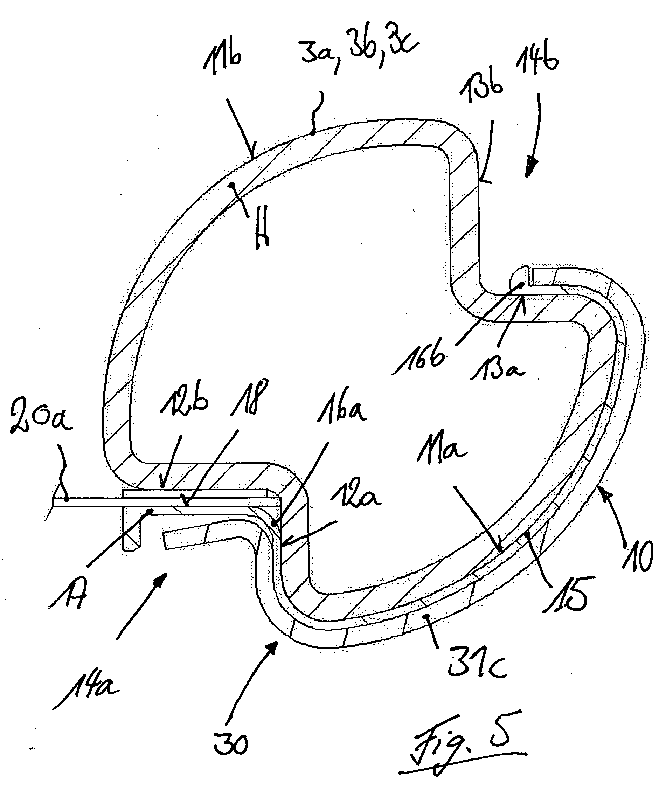

In den Figuren 2 und 3 ist eine erfindungsgemäße Klemmvorrichtung 10 zur Befestigung eines bevorzugt als Scheibe 20 ausgebildeten Anbauteils an den Profilrohren 3a bzw. 3b. bzw. 3c dargestellt. In den Figuren 4 und 5 ist eine erfindungsgemäße Klemmvorrichtung 10 zur Befestigung eines bevorzugt als Kabinenverkleidung, beispielsweise Verdeckplane 20a, ausgebildeten Anbauteils an den Profilrohren 3a bzw. 3b. bzw. 3c dargestellt.

Die Profilrohre 3a, 3b bzw. 3c weisen zumindest abschnittsweise einen von der Kreisform abweichenden, bevorzugt hohlen Profilquerschnitt H auf. Die Außenkontur des Profilquerschnitts H weist im dargestellten Ausführungsbeispiel einen symmetrischen Aufbau mit zwei konvexen, nach außen gekrümmte Umfangswänden 11 a, 11 b und zwei nach Innen gewandten Hinterschneidungen 14a, 14b auf. Das Profilrohr 3a, 3b, 3c besteht hierzu weiterhin aus jeweils zwei hinterschnittig an den Umfangswänden 11 a bzw. 11 b angeordneten Profilwänden 12a, 13a bzw. 12b, 13b, wodurch ein Profilquerschnitt H mit einem "8-er" Profil gebildet ist. Die Profilwände 12a, 13a bzw. 12b, 13b sind hierbei jeweils nach Innen geneigt angeordnet, wodurch im Bereich der nach innen geneigten Profilwände 12a, 12b die V-förmige Hinterschneidung 14a und im Bereich der nach Innen geneigten Profilwände 13a, 13b die V-förmige Hinterschneidung 14b des Profilrohres gebildet wird.

Die erfindungsgemäße Klemmvorrichtung 10 gemäß den Figuren 2 bis 5 umfasst ein einteiliges Klemmstück 15, das beispielsweise die konvexe Umfangswand 11 a umgreift und mit einer an den konvexen Außenkonturbereich der Umfangswand 11 a angepassten bogenförmigen Innenkontur versehen ist. Das Klemmstück 15 ist mit einem ersten hakenförmigen Fortsatz 16a versehen, der im angebauten Zustand an der Profilwand 12a anliegt und an dieser angreift. Das Klemmstück 15 ist mit einem zweiten hakenförmigen Fortsatz 16b versehen, der im angebauten Zustand an der Profilwand 13a anliegt und an dieser angreift.

In umfangsseitiger Verlängerung ist das Klemmstück 15 mit einer einstückig angeformten Haltenase 17 versehen, die im Bereich der Hinterschneidung 14b bzw. der Hinterschneidung 14a angeordnet ist und an der eine Anlagefläche 18 für das von einer Scheibe 20 bzw. einer Verdeckplane 20a gebildete, als Verkleidungsteil ausgebildete Anbauteil ausgebildet ist. Die Anlagefläche 18 ist in dem dargestellten angebauten Zustand des Klemmstücks 15 im Wesentlichen parallel zu der Profilwand 13b bzw. der Profilwand 12b der entsprechenden Hinterschneidung des Profilrohrs angeordnet, die eine Anlagefläche für die Scheibe 20 bzw. die Verdeckplane 20a an dem Profilrohr bildet. Die Scheibe 20 bzw. die Verdeckplane 20a ist hierbei in dem Einbauraum, der von der Anlagefläche 18 der Haltenase 17 und der die weitere Anlagefläche bildenden Profilwand 13b bzw. 12b gebildet ist, angeordnet und formschlüssig gehaltert.

Bevorzugt ist das Klemmstück 15 von einem Kunststoffbauteil gebildet.

Im dargestellten Ausführungsbeispiel gemäß den Figuren 2 und 3 ist die Scheibe 20 am Außenumfang mit einem Dichtungsprofil 21 versehen. Die Haltenase 17 steht hierbei mit der Anlagefläche 18 mit einer Außen- bzw. Innenseite der Scheibe 20 in Kontakt. An der Profilwand 13b des Profilrohrs liegt die Scheibe 20 über das Dichtungsprofil 21 an.

Das Klemmstück 15 gemäß den Figuren 2 und 3 ist zwischen den beiden hakenförmigen Fortsätzen 16a, 16b zur elastischen Verformbarkeit mit einem Scharniergelenk 25 versehen, das im dargestellten Ausführungsbeispiel von einem Filmscharnier ausgebildet ist. Das Scharniergelenk 25 ist durch eine entsprechende V-förmige Aussparung 26 im Querschnitt des Klemmstücks 15 hergestellt. Das Scharniergelenk 25 ermöglicht eine Beweglichkeit des hakenförmigen Fortsatzes 16a, wodurch das einteilige Klemmstück 15 auf das Profilrohr 3a, 3b, 3c ausgesteckt werden kann. Im aufgesteckten Zustand liegt das Klemmstück 15 an der konvexen Umfangswand 11a an, wobei die hakenförmigen Fortsätze 16a, 16b die Umfangswand 11a hintergreifen und an den beiden hinterschnittig angeordneten Profilwänden 12a, 13a angreifen.

Gemäß der in den Figuren 4 und 5 dargestellten Ausführungsform des Klemmstücks 15 wird die elastische Verformbarkeit zwischen den beiden hakenförmigen Fortsätzen 16a, 16b durch entsprechende Materialeigenschaften des aus einem elastischen Kunststoff bestehenden Klemmstücks 15 erzielt. Die elastischen Eigenschaften des Klemmstücks 15 ermöglichen eine Beweglichkeit der hakenförmigen Fortsätze 16a, 16b, wodurch das einteilige Klemmstück 15 auf das Profilrohr 3a, 3b, 3c ausgesteckt werden kann. Im aufgesteckten Zustand liegt das Klemmstück 15 an der konvexen Umfangswand 11 a an, wobei die hakenförmigen Fortsätze 16a, 16b die Umfangswand 11a hintergreifen und an den beiden hinterschnittig angeordneten Profilwänden 12a, 13a angreifen.

Zur Befestigung des Klemmstücks 15 an dem Profilrohr 3a, 3b, 3c umfasst die Klemmvorrichtung 10 eine Spannvorrichtung 30, mittels der das Klemmstück 15 in Anlage an das Profilrohr 3a, 3b, 3c gebracht und an dem Profilrohr 3a, 3b, 3c angeklemmt werden kann.

Die Spannvorrichtung 30 der Figuren 2 und 3 umfasst zwei bevorzugt von Federblechen gebildete Federelemente 31a, 31b, die mittels eines Spannmittels 32 mit dem Klemmstück 15 verspannbar sind. Das Federelement 31a ist als bogenförmiger Federbügel ausgebildet, der im angebauten Zustand im Bereich der konvexen Innenkontur des Klemmstücks 15 angeordnet ist mit einem ersten, nach Innen in die Hinterschneidung 14a hineinragenden und abgebogenen ersten Ende mit dem hakenförmigen Fortsatz 16a des Klemmstücks 15 in Wirkerbindung steht. Das Federelement 31 b ist als leicht abgeknickter Federbügel ausgebildet, der sich mit einem abgeknickten Bereich im eingebauten Zustand durch eine Durchgangsöffnung 33 des Klemmstücks 15 erstreckt, die zwischen dem hakenförmigen Fortsatz 16b und der Haltenase 17 angeordnet ist. An dem abgeknickten Bereich steht das Federelement 31 b mit einem in die Hinterschneidung 14b hineinragenden ersten Ende mit dem hakenförmigen Fortsatz 16b des Klemmstücks 15 in Wirkverbindung.

Das Spannmittel 32 ist im vorliegenden Ausführungsbeispiel von einer Spannverschraubung mit einer Spannschraube 35 und einer Gewindemutter 41 gebildet. Die Spannschraube 35 erstreckt sich durch Durchgangsbohrungen 36a, 36b in den beiden Federelementen 31a, 31b und durch eine Durchgangsbohrung 37 in einer Versteifungsrippe 38 des Klemmstücks 15, die in Verlängerung des hakenförmigen Fortsatz 16b angeordnet ist. An dem Klemmstück 15 ist im Bereich der Haltenase 17 eine weitere Versteifungsrippe 39 ausgebildet, die mit einer Ausnehmung 40 versehen ist, in der die Gewindemutter 41 drehfest und axial verschiebbar gehaltert ist, mit der die Spannschraube 35 verschraubt werden kann.

Das Federelement 31a ist an einem zweiten Ende radial nach außen umgebogen, wobei an diesem abgebogenen Ende die Durchgangsbohrung 36a angeordnet ist. Eine Außenstirnfläche 50 dieses nach Außen abgebogenen Endes des Federelements 31 a bildet eine Anlagefläche, an der im montierten Zustand das zweite Federelement 31 b mit der Stirnseite 51 eines in Richtung zu dem ersten Federelement 31a abgebogenen zweiten Endes in Kontakt steht, wodurch ein Anlagepunkt und eine Schwenkachse S zwischen den beiden Federelementen 31 a, 31b gebildet wird. Die von der Spannschraube 35 und der Gewindemutter 41 gebildeten Spannverschraubung ist zwischen dieser Schwenkachse S, die an den beiden zweiten Enden der Federelemente 31 a, 31 b ausgebildet ist, und den beiden ersten Enden der beiden Federelemente 31 a, 31 b angeordnet. Durch Verschrauben der Spannverschraubung kann somit eine Spannbewegung der beiden Federelemente 31a, 31b um die Schwenkachse S erzielt werden, bei der die beiden ersten Enden nach dem Prinzip einer Pinzette aufeinander zu verschwenkt werden.

Die Spannvorrichtung 30 der Figuren 4 und 5 umfasst ein von einer Federklammer gebildetes Federelement 31 c, das auf das Klemmstück 15 aufsteckbar ist. Das Federelement 31c ist als bogenförmig gebogene Federklammer ausgebildet, die im angebauten Zustand im Bereich der konvexen Innenkontur des Klemmstücks 15 angeordnet ist mit einem ersten, nach Innen in die Hinterschneidung 14a hineinragenden und abgebogenen ersten Ende mit dem hakenförmigen Fortsatz 16a des Klemmstücks 15 in Wirkverbindung steht und mit einem zweiten, nach Innen in die Hinterschneidung 14b hineinragenden und abgebogenen Ende mit dem hakenförmigen Fortsatz 16b des Klemmstücks 15 in Wirkverbindung steht.

Das Klemmstück 15 weist in Längsrichtung des Profilrohrs 3a, 3b, 3c einen U-förmigen Querschnitt mit einem in Längsrichtung des Profilrohres 3a, 3b, 3c angeordneten Stegabschnitt, der mit der bogenförmigen Innenkontur versehen ist, und mit seitlichen, senkrecht zum Stegschnitt angeordneten Flanschabschnitten auf, zwischen denen ein Einbauraum E für die aus den beiden Federelementen 31 a, 31 b und dem Spannmittel 32 bestehenden Spannvorrichtung 30 der Figuren 2, 3 bzw. die von dem Federelement 31 c gebildeten Spannvorrichtung 30 der Figuren 4, 5 gebildet ist. Der Einbauraum E an dem Klemmstück 15 kann nach erfolgter Montage der Spannvorrichtung 30 - wie in den Figuren 2, 3 dargestellt ist - durch eine Abdeckung 45 verschlossen werden. Die Abdeckung 45 kann hierbei mittels einer Clipsverbindung an dem Klemmstück 15 befestigt werden, die von Rastnasen 46 an der Abdeckung 45 gebildet werden kann, die mit entsprechenden Rastausnehmungen 47 in dem Klemmstück 15 zusammenwirken.

Zur Montage der Scheibe 20 wird die Scheibe 20 in die entsprechende von den beiden Profilwänden 13a, 13b gebildete Hinterschneidung 14b eingelegt. Anschließend kann das einteilige Klemmstück 15 aufgesteckt werden, wobei dieses mit den beiden hakenförmigen Fortsätzen 16a, 16b die Umfangswand 11a hintergreift und mit den hinterschnittig angeordneten Profilwänden 12a, 13a an den Hinterschneidungen 14a, 14b in Kontakt gelangt. Nach dem Anlegen des ersten Federelements 31a und Einstecken des zweiten Federelements 31 b durch die Durchgangsöffnung 33 in dem Klemmstück 15 kann die Gewindemutter 41 in die Ausnehmung 40 eingelegt und die Spannschraube 25 durch die Durchgangsbohrungen 36a, 36b, 37 geführt und mit der Gewindemutter 41 verschraubt werden. Wie in der Figur 3 dargestellt, liegt die montierte Spannschraube 35 mit dem Schraubenkopf an dem nach Außen abgebogenen zweiten Ende des ersten Federelements 31a an und liegt die in der Ausnehmung 40 des Klemmstücks 15 drehfest angeordnete Gewindemutter 41 an dem zweiten Federelement 31 b an. Beim Verschrauben der Spannschraube 35 mit der Gewindemutter 41 wird somit eine Klemmbewegung der beiden Federelemente 31 a, 31 b um die Schwenkachse S erzielt, so dass die beiden Federelemente 31 a, 31 b gegeneinander verspannt werden und jeweils mit den ersten Enden den entsprechenden hakenförmigen Fortsatz 16a bzw. 16b des Klemmstücks 15 gegen die Profilwand 12a bzw. 13a verspannen. Durch das Spannmittel 32 und die Federelemente 31 a, 31 b wird somit das Klemmstück 15 in Anlage an das Profilrohr 3a, 3b, 3c gebracht, wobei über die Haltenase 17 mit der Anlagefläche 18 die Scheibe 20 in dem von der Anlagefläche 18 und der Profilwand 13b gebildeten Einbauraum formschlüssig gehalten wird, so dass die Scheibe 20 in der Hinterschneidung 14b des Profilquerschnitts H in die vorbestimmten Position gebracht und gehalten wird. Nach erfolgter Montage des Spannmittels 32 kann die Abdeckung 45 auf das Klemmstück 15 aufgesteckt werden, um den Einbauraum E abzudecken.

Zur Montage der Verdeckplane 20a wird die Verdeckplane 20a in die entsprechende von den beiden Profilwänden 12a, 12b gebildete Hinterschneidung 14a eingelegt. Anschließend kann das einteilige Klemmstück 15 aufgesteckt werden, wobei dieses mit den beiden hakenförmigen Fortsätzen 16a, 16b die Umfangswand 11a hintergreift und mit den hinterschnittig angeordneten Profilwänden 12a, 13a an den Hinterschneidungen 14a, 14b in Kontakt gelangt. Durch Aufclipsen des von der Federklammer gebildeten Federelements 31c werden durch die beiden entsprechenden Federenden des Federelements 31 c die entsprechenden hakenförmigen Fortsätze 16a bzw. 16b des Klemmstücks 15 gegen die Profilwand 12a bzw. 13a verspannt. Durch Aufstecken des Federelements 31 c wird somit das Klemmstück 15 in Anlage an das Profilrohr 3a, 3b, 3c gebracht, wobei über die Haltenase 17 mit der Anlagefläche 18 die Verdeckplane 20a in dem von der Anlagefläche 18 und der Profilwand 12b gebildeten Einbauraum formschlüssig gehalten wird, so dass die Verdeckplane 20a in der Hinterschneidung 14a des Profilquerschnitts H in die vorbestimmten Position gebracht und gehalten wird. Sofern das Klemmstück 15 der Figuren 4 und 5 an einem Eckbereich der Verdeckplane 20a an dem Profilrohr 3a, 3b, 3c angeordnet und befestigt wird, kann somit auf einfache Weise ein Abschälen der Verdeckplane 20a im Eckbereich verhindert werden.

Die Erfindung ist nicht auf die in den Figuren dargestellte Ausführungsform beschränkt.

An der Haltenase 17 des Klemmstücks 15 der Figuren 2 bzw. 3 kann im Bereich der Anlagefläche 18 für die Glasscheibe 20 ein Weichbauteil, beispielsweise ein EPDM-Element oder ein Kunststoffstopfen angeordnet werden, um eine Schwingungsabkopplung der Scheibe 20 zu erzielen.

An der Haltenase 17 des Klemmstücks 15 der Figuren 4 bzw. 5 können im Bereich der Anlagefläche 18 für die Verdeckplane 20a Haltenoppen oder ein Verzahnungsabschnitt ausgebildet werden, um eine Verzahnung zwischen der Verdeckplane und der Haltenase 17 zu erzielen.

Bei entsprechender Steifigkeit des Klemmstücks 15 gemäß den Figuren 2 und 3 im Bereich des hakenförmigen Fortsatzes 16b bzw. 16a kann eine Spannvorrichtung mit einem einzigen Federblech 31 a bzw. 31 b ausreichend sein, das mittels eines Spannmittels gegen das Klemmstück 15 verspannt wird, um eine entsprechende Befestigung des Klemmstücks 15 an dem Profilrohr zu erzielen.

Das Klemmstück 15 gemäß den Figuren 2 und 3 kann zusätzlich zu der Haltenase 17 im Bereich der Hinterschneidung 14b mit einer weiteren Haltenase im Bereich der Hinterschneidung 14a versehen werden, um eine weitere Scheibe in der Hinterschneidung 14a zwischen der weiteren Haltenase und der Profilwand 12b haltern zu können. Hierdurch kann mit dem Klemmstück 15 eine doppelte Scheibenbefestigung von zwei Scheiben an dem Profilrohr 3a, 3b, 3c auf einfache Weise erzielt werden. Entsprechend kann das Klemmstück der Figuren 4 und 5 zusätzlich zu der Haltenase 17 im Bereich der Hinterschneidung 14a mit einer weiteren Haltenase im Bereich der Hinterschneidung 14b versehen werden, um eine weitere Verdeckplane 20a in der Hinterschneidung 14b zwischen der weiteren Haltenase und der Profilwand 13b haltern zu können. Hierdurch kann mit dem Klemmstück 15 eine doppelte Planenbefestigung von zwei Verdeckplanen 20a an dem Profilrohr 3a, 3b, 3c auf einfache Weise erzielt werden

Das Klemmstück 15 gemäß den Figuren 2 und 3 kann ebenfalls zur Befestigung einer Verdeckplane 20a bzw. das Klemmstück 15 gemäß den Figuren 4 und 5 zur Befestigung einer Scheibe 20 verwendet werden.

Das Klemmstück 15 kann mit einem oder mehreren weiteren Befestigungsadaptern, beispielsweise Gewindebohrungen, versehen sein, um an dem die Scheibe 20 bzw. die Verdeckplane 20a halternden Klemmstück 15 weitere Anbauteile, beispielsweise Spiegel, Lampen, Arbeitsscheinwerfer oder Schutzgitter zu befestigen. Zudem kann bei den erfindungsgemäßen Klemmstücken 15 eine Kabelbefestigung und/oder eine Kabelführung integriert werden, um als Zusatzfunktion mit den Klemmstücken 15 Kabel an den Profilrohren 3a, 3b, 3c des Fahrerschutzdaches 3 verlegen und haltern zu können. Zudem kann das erfindungsgemäße einteilige Klemmstück 15 ohne die Haltenase ausgebildet sein und nur mit einem entsprechenden Befestigungsadapter, beispielsweise Gewindebohrungen, versehen sein, um mittels des Klemmstück 15 Anbauteile, beispielsweise Spiegel, Lampen, Arbeitsscheinwerfer oder Schutzgitter an dem Profilrohren 3a, 3b, 3c des Fahrerschutzdaches 3 zu befestigen oder einen Kabelhalter zu bilden.

## Patentansprüche

1. Klemmvorrichtung (10) zur Befestigung eines Anbauteils, insbesondere einer Scheibe (20) oder einer Kabinenverkleidung, an einem Profilrohr (3a; 3b; 3c) eines Fahrerschutzdaches (3) eines Fahrzeugs (1), wobei das Profilrohr (3a; 3b; 3c) einen Profilquerschnitt mit mindestens zwei hinterschnittig angeordneten Profilwänden (12a, 13a; 12b, 13b) aufweist, wobei die Klemmvorrichtung (10) ein einteiliges Klemmstück (15) umfasst, das mit einer Haltenase (17) versehen ist, mittels der das Anbauteil (20; 20a) formschlüssig an dem Profilrohr (3a; 3b; 3c) gehaltert ist, wobei das Klemmstück (15) zwei hakenförmige Fortsätze (16a, 16b) zum jeweiligen Angreifen an einer der Profilwände (12a, 13a; 12b, 13b) des Profilrohres (3a; 3b; 3c) aufweist, wobei das Klemmstück (15) zwischen den hakenförmigen Fortsätzen (16a, 16b) elastisch verformbar ist, **dadurch gekennzeichnet, dass** das Klemmstück das Profilrohr (3a;3b;3c) zumindest teilweise umgreift und (15) mittels einer Spannvorrichtung (30) an dem Profilrohr (3a; 3b; 3c) anklemmbar ist, wobei die Spannvorrichtung (30) ein Federelement (31c), insbesondere eine Federklammer, umfasst, das mit beiden hakenförmigen Fortsätzen (16a; 16b) des Klemmstücks (15) in Anlage steht und auf das Klemmstück (15) aufsteckbar ist, oder wobei die Spannvorrichtung (30) zwei Federelemente (31a, 31 b), insbesondere Federbleche, aufweist, wobei jedes Federelement (31a, 31 b) mit einem Ende jeweils mit einem hakenförmigen Fortsatz (16a, 16b) des Klemmstücks (15) in Anlage steht und die beiden Federelemente (31a, 31 b) mittels eines Spannmittels (32) gegeneinander verspannbar sind.

2. Klemmvorrichtung nach Anspruch 1, **dadurch gekennzeichnet, dass** die Haltenase (17) einstückig an dem Klemmstück (15) angeformt ist.

3. Klemmvorrichtung nach Anspruch 1 oder 2, **dadurch gekennzeichnet, dass** das Klemmstück (15) einen an die Außenkontur, insbesondere einen konvexen Außenkonturbereich, des Profilrohrs (3a; 3b; 3c) angepasste Innenkontur aufweist, an der die hakenförmigen Fortsätze (16a, 16b) angeformt sind.

4. Klemmvorrichtung nach einem der Ansprüche 1 bis 3, **dadurch gekennzeichnet, dass** das Klemmstück (15) zwischen den hakenförmigen Fortsätzen (16a, 16b) mit einem Scharniergelenk (25) versehen ist.

5. Klemmvorrichtung nach Anspruch 4, **dadurch gekennzeichnet, dass** das Scharniergelenk (25) als Filmscharnier ausgebildet ist.

6. Klemmvorrichtung nach einem der Ansprüche 1 bis 5, **dadurch gekennzeichnet, dass** die Haltenase (17) mit einer Anlagefläche (18) für das Anbauteil (20; 20a) versehen ist, die im angebauten Zustand des Klemmstücks (15) parallel zu einer Anlagefläche (13b; 12b) des Profilrohrs (3a; 3b; 3c) angeordnet ist, wobei in dem Zwischenraum zwischen den Anlageflächen (18, 13b; 12b) das Anbauteil (20; 20a) angeordnet ist.

7. Klemmvorrichtung nach einem der Ansprüche 1 bis 6, **dadurch gekennzeichnet, dass** die zwei Federelemente (31a, 31 b) im montierten Zustand mit zweiten Enden an einem Anlagepunkt (S) miteinander in Wirkverbindung stehen, wobei das Spannmittel (32) zwischen den beiden Enden der Federelemente (31a, 31 b) angeordnet ist.

8. Klemmvorrichtung nach einem der Ansprüche 1 bis 7, **dadurch gekennzeichnet, dass** im angebauten Zustand ein erstes Federelement (31a) der zwei Federelemente (31a, 31b) im Bereich eines ersten hakenförmigen Fortsatzes (16a) des Klemmstücks (15), der an einer ersten Profilwand (12a) des Profilrohres (3a; 3b; 3c) angreift, angeordnet ist und den ersten hakenförmigen Fortsatz (16a) gegen die erste Profilwand (12a) verspannt und ein zweites Federelement (31b) der zwei Federelemente (31a, 31 b) im Bereich eines zweiten hakenförmigen Fortsatzes (16b) des Klemmstücks (15), der an einer zweiten Profilwand (13a) des Profilrohres (3a; 3b; 3c) angreift, angeordnet ist und den zweiten hakenförmigen Fortsatz (16b) gegen die zweite Profilwand (13a) verspannt.

9. Klemmvorrichtung nach einem der Ansprüche 1 bis 8, **dadurch gekennzeichnet, dass** das Klemmstück (15) zwischen der Haltenase (17) und dem zweiten hakenförmigen Fortsatz (16b) mit einer Durchgangsöffnung (33) für das zweite Federelement (31b) versehen ist.

10. Klemmvorrichtung nach einem der Ansprüche 1 bis 9, **dadurch gekennzeichnet, dass** an der Haltenase (17) im Bereich der Anlagefläche (18) ein Weichbauteil angeordnet ist.

11. Klemmvorrichtung nach einem der Ansprüche 1 bis 10, **dadurch gekennzeichnet, dass** das Spannmittel (32) als Spannverschraubung ausgebildet ist.

12. Klemmvorrichtung nach einem der Ansprüche 1 bis 11, **dadurch gekennzeichnet, dass** das Klemmstück (15) mit einem Befestigungsadapter, insbesondere einer Gewindebohrung oder einem Halter, für ein weiteres Anbauteil versehen ist.

13. Klemmvorrichtung nach einem der Ansprüche 1 bis 12, wobei das Profilrohr (3a; 3b; 3c) einen Profilquerschnitt (H) mit vier hinterschnittig angeordneten Profilwänden (12a, 12b, 13a, 13b) aufweist, **dadurch gekennzeichnet, dass** das Klemmstück (15) mit einer weiteren Haltenase zur weiteren Befestigung eines zweiten Anbauteils versehen ist.

14. Klemmvorrichtung nach einem der Ansprüche 1 bis 13, **dadurch gekennzeichnet, dass** das Klemmstück (15) als Kunststoffbauteil ausgebildet ist.

15. Klemmvorrichtung nach einem der Ansprüche 1 bis 14, **dadurch gekennzeichnet, dass** das Klemmstück (15) einen im Wesentlichen U-förmigen Querschnitt aufweist, wobei der Querschnitt einen Einbauraum (E) für die Spannvorrichtung (30) bildet.

16. Klemmvorrichtung nach Anspruch 15, **dadurch gekennzeichnet, dass** eine Abdeckung (45) zum Verschließen des Einbauraumes (E) vorgesehen ist.

17. Klemmvorrichtung nach Anspruch 16, **dadurch gekennzeichnet, dass** die Abdeckung (45) mittels einer Clipsverbindung an dem Klemmstück (15) befestigbar ist.

18. Fahrzeug, insbesondere Flurförderzeug, mit einer Klemmvorrichtung nach einem der vorangegangenen Ansprüche, wobei mittels der Klemmvorrichtung (10) das als eine Scheibe (20) ausgebildete Anbauteil an dem Fahrerschutzdach (3) befestigt ist.

19. Fahrzeug, insbesondere Flurförderzeug, mit einer Klemmvorrichtung nach einem der Ansprüche 1 bis 17, wobei mittels der Klemmvorrichtung (10) das als eine an dem Kabinenverkleidung (20a), insbesondere eine Verdeckplane, ausgebildete Anbauteil an dem Fahrerschutzdach (3) befestigt ist.

## Claims

1. Clamping device (10) for fastening an add-on part, in particular a window (20) or a cab fairing, to a profiled tube (3a; 3b; 3c) of a driver's protective roof (3) of a vehicle (1), wherein the profiled tube (3a; 3b; 3c) has a profiled cross section with at least two profiled walls (12a, 13a; 12b, 13b) arranged in undercut form, wherein the clamping device (10) comprises a single-part clamping piece (15) which is provided with a holding lug (17) by means of which the add-on part (20; 20a) is held in a form-fitting manner on the profiled tube (3a; 3b; 3c), wherein the clamping piece (15) has two hook-shaped extensions (16a, 16b) for respectively acting on one of the profiled walls (12a, 13a; 12b, 13b) of the profiled tube (3a; 3b; 3c), wherein the clamping piece (15) is elastically deformable between the hook-shaped extensions (16a, 16b), **characterized in that** the clamping piece at least partially engages around the profiled tube (3a; 3b; 3c) and can be clamped on the profiled tube (3a; 3b; 3c) by means of a tensioning device (30), wherein the tensioning device (30) comprises a spring element (31c), in particular a spring clamp, which is in contact with the two hook-shaped extensions (16a; 16b) of the clamping piece (15) and can be plugged onto the clamping piece (15), or wherein the tensioning device (30) has two spring elements (31a, 31b), in particular spring plates, wherein each spring element (31a, 31b) is in contact at one end in each case with a hook-shaped extension (16a, 16b) of the clamping piece (15) and the two spring elements (31a, 31b) can be braced against each other by means of a tensioning means (32).

2. Clamping device according to Claim 1, **characterized in that** the holding lug (17) is moulded integrally on the clamping piece (15).

3. Clamping device according to Claim 1 or 2, **characterized in that** the clamping piece (15) has an inner contour which is adapted to the outer contour, in particular to a convex outer contour region, of the profiled tube (3a; 3b; 3c) and on which the hook-shaped extensions (16a, 16b) are moulded.

4. Clamping device according to one of Claims 1 to 3, **characterized in that** the clamping piece (15) is provided with a hinge joint (25) between the hook-shaped extensions (16a, 16b).

5. Clamping device according to Claim 4, **characterized in that** the hinge joint (25) is designed as a film hinge.

6. Clamping device according to one of Claims 1 to 5, **characterized in that** the holding lug (17) is provided with a contact surface (18) for the add-on part (20; 20a), which contact surface, in the installed state of the clamping piece (15), is arranged parallel to a contact surface (13b; 12b) of the profiled tube (3a; 3b; 3c), wherein the add-on part (20; 20a) is arranged in the intermediate space between the contact surfaces (18, 13b; 12b).

7. Clamping device according to one of Claims 1 to 6, **characterized in that** the two spring elements (31a, 31b) are operatively connected to each other in the fitted state at a contact point (S) by second ends, wherein the tensioning means (32) is arranged between the two ends of the spring elements (31a, 31b).

8. Clamping device according to one of Claims 1 to 7, **characterized in that**, in the mounted state, a first spring element (31a) of the two spring elements (31a, 31b) is arranged in the region of a first hook-shaped extension (16a) of the clamping piece (15), which extension acts on a first profiled wall (12a) of the profiled tube (3a; 3b; 3c), and braces the first hook-shaped extension (16a) against the first profiled wall (12a), and a second spring element (31b) of the two spring elements (31a, 31b) is arranged in the region of a second hook-shaped extension (16b) of the clamping piece (15), which extension acts on a second profiled wall (13a) of the profiled tube (3a; 3b; 3c), and braces the second hook-shaped extension (16b) against the second profiled wall (13a).

9. Clamping device according to one of Claims 1 to 8, **characterized in that** the clamping piece (15) is provided with a passage opening (33) for the second spring element (31b) between the holding lug (17) and the second hook-shaped extension (16b).

10. Clamping device according to one of Claims 1 to 9, **characterized in that** a soft component is arranged on the holding lug (17) in the region of the contact surface (18).

11. Clamping device according to one of Claims 1 to 10, **characterized in that** the tensioning means (32) is designed as a tensioning screw connection.

12. Clamping device according to one of Claims 1 to 11, **characterized in that** the clamping piece (15) is provided with a fastening adapter, in particular a threaded bore or a holder, for a further add-on part.

13. Clamping device according to one of Claims 1 to 12, wherein the profiled tube (3a; 3b; 3c) has a profiled cross section (H) with four profiled walls (12a, 12b, 13a, 13b) arranged in undercut form, **characterized in that** the clamping piece (15) is provided with a further holding lug for the further fastening of a second add-on part.

14. Clamping device according to one of Claims 1 to 13, **characterized in that** the clamping piece (15) is designed as a plastics component.

15. Clamping device according to one of Claims 1 to 14, **characterized in that** the clamping piece (15) has a substantially U-shaped cross section, wherein the cross section forms an installation space (E) for the tensioning device (30).

16. Clamping device according to Claim 15, **characterized in that** a covering (45) is provided for closing the installation space (E).

17. Clamping device according to Claim 16, **characterized in that** the covering (45) is fastenable to the clamping piece (15) by means of a clip connection.

18. Vehicle, in particular industrial truck, with a clamping device according to one of the preceding claims, wherein the add-on part which is in the form of a window (20) is fastened to the driver's protective roof (3) by means of the clamping device (10).

19. Vehicle, in particular industrial truck, with a clamping device according to one of Claims 1 to 17, wherein the add-on part designed in the form of a cab fairing (20a), in particular a canopy-top tarpaulin, is fastened to the driver's protective roof (3) by means of the clamping device (10).

## Revendications

1. Dispositif de serrage (10) pour la fixation d'un élément, en particulier d'une vitre (20) ou d'un habillage de cabine, sur un tube profilé (3a; 3b; 3c) d'un toit de protection de conducteur (3) d'un véhicule (1), dans lequel le tube profilé (3a; 3b; 3c) présente une section transversale profilée avec au moins deux parois profilées disposées en contre-dépouille (12a, 13a; 12b, 13b), dans lequel le dispositif de serrage (10) comprend une pièce de serrage en une seule pièce (15), qui est munie d'un ergot de maintien (17) au moyen duquel l'élément (20; 20a) est supporté par emboîtement sur le tube profilé (3a; 3b; 3c), dans lequel la pièce de serrage (15) présente deux prolongements en forme de crochets (16a, 16b) pour l'accrochage respectif à une des parois profilées (12a, 13a; 12b, 13b) du tube profilé (3a; 3b; 3c), dans lequel la pièce de serrage (15) est déformable élastiquement entre les prolongements en forme de crochets (16a, 16b), **caractérisé en ce que** la pièce de serrage entoure au moins partiellement le tube profilé (3a; 3b; 3c) et (15) peut être serrée sur le tube profilé (3a; 3b; 3c) au moyen d'un système de serrage (30), dans lequel le système de serrage (30) comprend un élément de ressort (31c), en particulier une attache à ressort, qui est appliqué sur les deux prolongements en forme de crochets (16a; 16b) de la pièce de serrage (15) et qui peut être engagé sur la pièce de serrage (15), ou dans lequel le système de serrage (30) présente deux éléments de ressort (31a, 31b), en particulier des tôles élastiques, dans lequel chaque élément de ressort (31a, 31b) est respectivement appliqué par une extrémité sur un prolongement en forme de crochet (16a, 16b) de la pièce de serrage (15) et les deux éléments de ressort (31a, 31b) peuvent être serrés l'un contre l'autre au moyen d'un moyen de serrage (32).

2. Dispositif de serrage selon la revendication 1, **caractérisé en ce que** l'ergot de maintien (17) est façonné en une seule pièce sur la pièce de serrage (15).

3. Dispositif de serrage selon la revendication 1 ou 2, **caractérisé en ce que** la pièce de serrage (15) présente un contour intérieur adapté au contour extérieur, en particulier à une région convexe du contour extérieur, du tube profilé (3a; 3b; 3c), sur lequel les prolongements en forme de crochets (16a, 16b) sont formés.

4. Dispositif de serrage selon l'une quelconque des revendications 1 à 3, **caractérisé en ce que** la pièce de serrage (15) est munie d'une articulation à charnière (25) entre les prolongements en forme de crochets (16a, 16b).

5. Dispositif de serrage selon la revendication 4, **caractérisé en ce que** l'articulation à charnière (25) est constituée par une charnière pelliculaire.

6. Dispositif de serrage selon l'une quelconque des revendications 1 à 5, **caractérisé en ce que** l'ergot de maintien (17) est doté d'une face d'appui (18) pour l'élément (20; 20a), qui dans l'état monté de la pièce de serrage (15) est disposée parallèlement à une face d'appui (13b; 12b) du tube profilé (3a; 3b; 3c), dans lequel l'élément (20; 20a) est disposé dans l'espace intermédiaire entre les faces d'appui (18, 13b; 12b).

7. Dispositif de serrage selon l'une quelconque des revendications 1 à 6, **caractérisé en ce que** les deux éléments de ressort (31a, 31b) sont dans l'état monté en liaison active l'un avec l'autre par des deuxièmes extrémités en un point d'appui (S), dans lequel le moyen de serrage (32) est disposé entre les deux extrémités des éléments de ressort (31a, 31b).

8. Dispositif de serrage selon l'une quelconque des revendications 1 à 7, **caractérisé en ce que** dans l'état monté un premier élément de ressort (31a) des deux éléments de ressort (31a, 31b) est disposé dans la région d'un premier prolongement en forme de crochet (16a) de la pièce de serrage (15), qui s'accroche à une première paroi profilée (12a) du tube profilé (3a; 3b; 3c), et serre le premier prolongement en forme de crochet (16a) contre la première paroi profilée (12a) et un deuxième élément de ressort (31b) des deux éléments de ressort (31a, 31b) est disposé dans la région d'un deuxième prolongement en forme de crochet (16b) de la pièce de serrage (15), qui s'accroche à une deuxième paroi profilée (13a) du tube profilé (3a; 3b; 3c), et serre le deuxième prolongement en forme de crochet (16b) contre la deuxième paroi profilée (13a).

9. Dispositif de serrage selon l'une quelconque des revendications 1 à 8, **caractérisé en ce que** la pièce de serrage (15) est munie entre l'ergot de maintien (17) et le deuxième prolongement en forme de crochet (16b) d'une ouverture de passage (33) pour le deuxième élément de ressort (31b).

10. Dispositif de serrage selon l'une quelconque des revendications 1 à 9, **caractérisé en ce qu'**un composant mou est disposé sur l'ergot de maintien (17) dans la région de la face d'appui (18).

11. Dispositif de serrage selon l'une quelconque des revendications 1 à 10, **caractérisé en ce que** le moyen de serrage (32) est constitué par une vis de serrage.

12. Dispositif de serrage selon l'une quelconque des revendications 1 à 11, **caractérisé en ce que** la pièce de serrage (15) est munie d'un adaptateur de fixation, en particulier d'un alésage fileté ou d'un support, pour un autre élément.

13. Dispositif de serrage selon l'une quelconque des revendications 1 à 12, dans lequel le tube profilé (3a; 3b; 3c) présente une section transversale profilée (H) avec quatre parois profilées (12a, 12b, 13a, 13b) disposées en contre-dépouille, **caractérisé en ce que** la pièce de serrage (15) est munie d'un autre ergot de maintien pour la fixation supplémentaire d'un deuxième élément.

14. Dispositif de serrage selon l'une quelconque des revendications 1 à 13, **caractérisé en ce que** la pièce de serrage (15) est un composant en matière plastique.

15. Dispositif de serrage selon l'une quelconque des revendications 1 à 14, **caractérisé en ce que** la pièce de serrage (15) présente une section transversale essentiellement en forme de U, dans lequel la section transversale forme une chambre de montage (E) pour le système de serrage (30).

16. Dispositif de serrage selon la revendication 15, **caractérisé en ce qu'**il est prévu un couvercle (45) pour fermer la chambre de montage (E).

17. Dispositif de serrage selon la revendication 16, **caractérisé en ce que** le couvercle (45) peut être fixé à la pièce de serrage (15) par un assemblage à déclic.

18. Véhicule, en particulier chariot de manutention, avec un dispositif de serrage selon l'une quelconque des revendications précédentes, dans lequel l'élément réalisé en forme de vitre (20) est fixé au toit de protection du conducteur (3) au moyen du dispositif de serrage (10).

19. Véhicule, en particulier chariot de manutention, avec un dispositif de serrage selon l'une quelconque des revendications 1 à 17, dans lequel l'élément réalisé en forme d'habillage de cabine (20a), en particulier de toile de capote, est fixé au toit de protection du conducteur (3) au moyen du dispositif de serrage (10).
